# EUROPÄISCHE PATENTSCHRIFT

(11) **EP 0 691 598 B1**
(45) Veröffentlichungstag und Bekanntmachung des Hinweises auf die Patenterteilung: **28.11.2001**
(21) Anmeldenummer: 95107131.5
(22) Anmeldetag: 11.05.1995
(51) Int. Cl.: G04G 5/00, G04G 7/02

(54) **Verfahren und Anordnung zum Betreiben einer Software-Uhr in einem Gerät der Unterhaltungselektronik**
Method and means to drive a software clock in an electronic entertainment apparatus
Méthode et dispositif pour le fonctionnement d'un logiciel de mesure de temps dans un appareil électronique de loisirs

(30) Priorität: 04.07.1994 DE 4423366
(43) Veröffentlichungstag der Anmeldung: 10.01.1996
(73) Patentinhaber: GRUNDIG Aktiengesellschaft, 90471 Nürnberg (DE)
(72) Erfinder: Will, Hans-Werner, Grundig E.M.V., Elek.-Mech.Vers, D-90762 Fürth (DE)

(56) Entgegenhaltungen:
- EP-A- 0 427 515
- EP-A- 0 511 573
- WO-A-91/16670
- US-A- 4 440 501

## Beschreibung

Die Erfindung betrifft ein Verfahren und eine Anordnung zum Betreiben einer Software-Uhr in einem Gerät der Unterhaltungselektronik.

Aus der EP-A-0 355 567 ist ein Verfahren zur Korrektur von Datum und Uhrzeit bekannt, bei welchem mit Hilfe der in Videotextsignalen übertragenen Daten für Datum und Uhrzeit eine Korrektur eines Uhrenbausteins durchgeführt werden kann. Dies geschieht dadurch, daß bei Vorliegen von Videotextdaten für Datum und Uhrzeit ein ständiger Vergleich der Daten des Uhrenbausteins mit empfangenen Videotextdaten in einer Vergleichsschaltung durchgeführt wird und bei Abweichung der Daten voneinander ein Signal zur Korrektur der Daten des Uhrenbausteins ausgegeben wird. Die EP-A-0 355 567 enthält auch einen Hinweis dahingehend, daß es sich bei dem genannten Uhrenbaustein auch um eine Software-Uhr handeln kann.

Weiterhin ist es aus der EP-A-0 562 410 bekannt, eine Echtzeituhr zu synchronisieren, wobei die Energieversorgung der Echtzeituhr und eines Mikrocontrollers, der zur Einstellung der Uhr vorgesehen ist, ausgeschaltet, eingeschaltet oder in einen Bereitschaftsbetrieb geschaltet werden kann. Im Normalbetrieb, d.h. im eingeschalteten Zustand, werden aus einem Rundfunksignal Zeitinformationen abgetrennt und dem Mikrocontroller zugeführt, der die Uhr nach dem Einschalten der Energieversorgung automatisch nachstellt. Weiterhin wird die Uhr auch vor der Überführung in den Bereitschaftsbetrieb aus dem ausgeschalteten Zustand nachgestellt, wozu eine zwischenzeitliche Umschaltung in den Normalbetrieb erfolgt.

Zum Betreiben einer Software-Uhr in einem Gerät der Unterhaltungselektronik ist ein selbstschwingender Taktgeber notwendig, der hochfrequente Taktsignale zur Verfügung stellt. Diese werden über einen Teiler, dessen Teilungsverhältnis vorgegeben ist, einer Zählschaltung zugeführt, dort gezählt und mittels eines Vergleichsvorgangs unter Verwendung eines Schwellenwertes in ein Zeitsignal umgewandelt. Die Genauigkeit dieses durch Zählung von Taktsignalen ermittelten Zeitsignals ist von der Qualität bzw. Schwingungsgenauigkeit des Taktgebers abhängig. Weiterhin ist aus der EP-A-0 258 838 ein Verfahren zum Aktualisieren der lokal erzeugten Uhrzeit eines Anwendersystems in einem Informationsübertragungssystem bekannt. Bei diesem bekannten Verfahren wird mittels eines Komparators die Uhrzeitablage des aus einem Oszillator und einem Uhrzeitprozessor bestehenden lokalen Uhrzeitgebers des Anwendersystems gegenüber einem Referenzuhrzeitgeber festgestellt. Diese Uhrzeit-Ablagedaten werden dann zusammen mit den Uhrzeitdaten, die den Zeitpunkt der Inbetriebnahme oder des vorausgegangenen Vergleichs beinhalten und in einem Aktualisierungszeitpunkt-Speicher abgespeichert sind, und mit den aktuellen Uhrzeitdaten des Referenzuhrzeitgebers einem Auswerter zugeführt, in dem die mittlere Frequenzgenauigkeit des Oszillators im Uhrzeitgeber des Anwendersystems ermittelt wird. Diese kann dann zur Anpassung der zeitlichen Abstände der Uhrzeit-Vergleichsintervalle und zu einer Frequenznachstimmung des Oszillators beim Anwendersystem-Uhrzeitgeber verwendet werden.

Aus WO 91/16670 ist eine Uhr, welche über Funk Zeitinformationen empfängt, bekannt. Diese Uhr weist einen Zähler, von dem die Uhr einen ersten Zahlenwert entnimmt, auf. Anschließend wird die empfangene Zeitinformation verarbeitet und die Verarbeitungszeit, durch Vergleich des Zählers mit dem vorher entnommenen Zahlenwert des Zählers, ermittelt und die Zeitinformation anhand dieser Werte korrigiert.

Aus EP-A-427 515 ist eine Zeiterfassungseinheit bekannt, welche mit Mitteln zur Zählung der aktuellen Zeit, sowie Mitteln zur Korrektur selbiger anhand von Informationssignalen ausgestattet ist, bekannt. Im weiteren sind Mittel zur Zeiterfassungskompensation vorgesehen, sowie Mittel zur Anzeige der korrigierten kompensierten Zeitanzeige.

Ausgehend von diesem Stand der Technik liegt der Erfindung die Aufgabe zugrunde, einen Weg zum Betreiben einer Software-Uhr aufzuzeigen, mittels dessen die Ganggenauigkeit der Software-Uhr verbessert wird.

Diese Aufgabe wird durch ein Verfahren mit dem im Anspruch 1 bzw. durch Anordnungen mit den in den Ansprüchen 6 und 7 angegebenen Merkmale gelöst. Vorteilhafte Ausgestaltungen und Weiterbildungen ergeben sich aus den abhängigen Ansprüchen.

Die Vorteile der Erfindung bestehen insbesondere darin, daß die Ganggenauigkeit einer Software-Uhr nach der Erfindung im Vergleich zu herkömmlichen Software-Uhren verbessert ist. Dies ist beispielsweise dann besonders vorteilhaft, wenn die Software-Uhr zur Realisierung einer automatischen Einschaltfunktion nach Vorgabe einer gewünschten Einschaltzeit, zur Realisierung einer zeitgesteuerten Kindersicherung oder zur Einblendung einer Uhrzeit, wenn momentan mittels eines Fernsehempfängers ein Fernsehsender angewählt ist, der keinen Videotext ausstrahlt, verwendet wird.

Weiterhin wird es durch die Erfindung erst möglich bzw. sinnvoll, zur Realisierung einer Software-Uhr auch billige Quarze oder Keramikschwinger als Taktgeber verwenden zu können, deren Schwingungsgenauigkeit im Vergleich zu teuren Quarzen oder Keramikschwingern verringert ist.

Weiterhin führt die Erfindung zu einer Verbilligung des jeweiligen Gerätes, da es zum Erhalt einer genauen Uhrzeit nicht mehr notwendig ist, vergleichsweise teure Echtzeituhren oder Software-Uhren mit vergleichsweise teuren Quarzen oder Keramikschwingern zu verwenden.

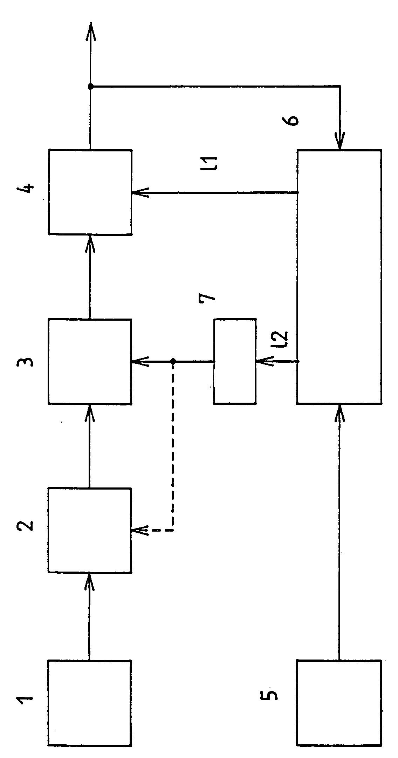

Weiterhin ist es mittels der Erfindung möglich, alterungs- und temperaturbedingte Frequenzschwankungen des Taktgebers zu kompensieren. Weitere Vorteile der Erfindung ergeben sich aus der Erläuterung eines Ausführungsbeispiels anhand der Figur, die ein Blockschaltbild mit den zum Verständnis der Erfindung notwendigen Bestandteilen eines Fernsehempfängers zeigt.

Die Figur zeigt einen Taktgeber 1, einen Frequenzteiler 2, eine Zähl- und Schwellwertvergleichsschaltung 3, ein Register 4, eine Videotextauswerteschaltung 5, eine Vergleichs- und Korrekturwertermittlungsschaltung 6 und einen nichtflüchtigen Korrekturwertspeicher 7.

Der Taktgeber 1 stellt an seinem Ausgang hochfrequente Taktsignale zur Verfügung. Als Taktgeber dient ein eigens zu diesem Zweck vorgesehener Quarz oder Keramikschwinger oder ein im Fernsehempfänger ohnehin vorhandener Quarz, beispielsweise derjenige, der für den Mikrocomputer des Fernsehempfängers die Taktsignale liefert. Die Schwingungsfrequenz des Taktgebers kann beispielsweise 16 MHz betragen.

Das Ausgangssignal des Taktgebers 1 wird über den Frequenzteiler 2, welcher aus mehreren in Reihe geschalteten Teilerbausteinen bestehen kann, der Zähl- und Schwellwertvergleichsschaltung 3 zugeführt. Dort werden die Taktsignale gezählt. Erreicht die Anzahl der gezählten Taktsignale einen vorgegebenen Schwellenwert, wird der Zähler rückgesetzt und dem Register 4 ein Zeitinkrementierungssignal zugeführt.

Im Register 4 sind Zahlenwerte abgespeichert, die der durch Zählung der Taktsignale ermittelten Zeitinformation entsprechen, d.h. Angabe über die momentane Uhrzeit in Stunden, Minuten und Sekunden. Durch jedes Zeitinkrementierungssignal wird der Sekundenwert erhöht, usw.

Befindet sich der Fernsehempfänger im eingeschalteten Zustand und ist momentan ein Sender eingestellt, der Videotextsignale ausstrahlt, dann erfolgt alle 30 Sekunden ein Vergleich der aus dem Videotextsignal abgetrennten Echtzeitinformation mit der durch Zählung der Taktsignale ermittelten Zeitinformation. Dazu wird mittels der Videotextauswertungsschaltung 5 die Echtzeitinformation aus dem Videotextsignal abgetrennt und an einen Eingang der Vergleichs- und Korrekturwertermittlungsschaltung 6 angelegt. Dem anderen Eingang der Vergleichs- und Korrekturwertermittlungsschaltung 6 wird die durch Zählung der Taktsignale ermittelte Zeitinformation aus dem Register 4 zugeführt. In der Vergleichs- und Korrekturwertermittlungsschaltung 6 erfolgt ein Vergleich der beiden genannten Zeitinformationen.

Stimmen die beiden Zeitinformationen nicht überein, dann erfolgt über die Signalleitung 11 eine Nachstellung der im Register 4 abgespeicherten Zeitinformation. Stimmen die beiden Zeitinformationen überein, dann ist eine derartige Nachstellung nicht notwendig.

Weiterhin wird nach einem Merkmal der Erfindung in der Vergleichs- und Korrekturwertermittlungsschaltung 6 ein Korrekturwert ermittelt, der von der Abweichung der genannten Zeitinformationen voneinander abhängig ist. Dieser Korrekturwert wird über die Signalleitung 12 dem Korrekturwertspeicher 7 zugeführt und dort abgespeichert.

Der im Korrekturwertspeicher 7 abgespeicherte Korrekturwert wird im normalen Gerätebetrieb und im Bereitschaftsbetrieb zur Veränderung des in der Zähl- und Schwellenwertvergleichsschaltung 3 verwendeten Schwellenwertes eingesetzt.

Läuft die Software-Uhr im Vergleich zur Echtzeit zu langsam, dann wird der Schwellenwert erniedrigt. Läuft die Software-Uhr im Vergleich zur Echtzeit zu schnell, dann wird der Schwellenwert erhöht. Gemäß einer vorteilhaften Ausgestaltung der Erfindung kann der Schwellenwert für eine von der Abweichung der genannten Zeitinformationen abhängige Anzahl von Sekunden pro Minute verändert sein und für die restlichen Sekunden dieser Minute unverändert.

Hat beispielsweise der voreingestellte Schwellenwert den Zahlenwert x, d.h. es müssen x Taktsignale gezählt werden, um 1 Sekunde zu erreichen, dann ist es beispielsweise möglich, die ersten 5 Sekunden jeder Minute bis zum Schwellenwert x-1 zu zählen und die restlichen 55 Sekunden der Minute bis zum Schwellenwert x.

Durch dieses Vorgehen wird erreicht, daß die Abweichungen der durch Zählung der Taktsignale ermittelten Zeitinformation von der Echtzeit im Vergleich zu bekannten Software-Uhren verringert ist.

Eine alternative Ausführungsform für die Erfindung besteht darin, den Frequenzteiler 2 als Teiler mit umschaltbarem Teilungsverhältnis auszugestalten und das Teilungsverhältnis in Abhängigkeit von dem im Korrekturwertspeicher 7 abgespeicherten Korrekturwert einzustellen bzw. zu verändern. Diese Ausführungsform ist in der Figur gestrichelt gezeichnet.

Vorstehend wird die Erfindung am Beispiel eines Fernsehempfängers beschrieben. Die Erfindung kann aber ebenso bei einem Videorecorder oder einem Fernsehempfänger mit integriertem Videorecorder verwendet werden.

Weiterhin kann die Erfindung beispielsweise auch bei Tonrundfunkempfängern, die zum Empfang von RDS-Signalen geeignet sind, verwendet werden, da auch zusammen mit dem RDS-Signal eine Echtzeitinformation übertragen wird. In diesem Fall wäre lediglich die in der Figur gezeigte Videotextauswerteschaltung 5 durch eine RDS-Auswerteschaltung zu ersetzen.

## Patentansprüche

1. Verfahren zum Betreiben einer Software-Uhr in einem Gerät der Unterhaltungselektronik, bei welchem hochfrequente Taktsignale gezählt und in eine Zeitinformation umgesetzt werden und bei welchem unter Verwendung eines Vergleiches der durch Zählung der Taktsignale ermittelten Zeitinformation und der aus dem Rundfunksignal abgeleiteten Echtzeitinformation eine Nachstellung der durch Zählung der Taktsignale ermittelten Zeitinformation erfolgt,
**dadurch gekennzeichnet, daß**
im Rahmen des Vergleiches der durch die Zählung der Taktsignale ermittelten Zeitinformation und der aus dem Rundfunksignal abgeleiteten Echtzeitinformation weiterhin ein Korrekturwert ermittelt wird und der Korrekturwert den Zählvorgang derart beeinflußt, daß die Abweichungen der durch Zählung der Taktsignale ermittelten Zeitinformation von der Echtzeitinformation verringert sind, wobei zur Ermittlung der Zeitinformation die Taktsignale bis zu einem vorgegebenen Schwellenwert gezählt werden und bei Erreichen des Schwellenwertes eine Inkrementierung der Zeitinformation um eine Zeiteinheit erfolgt, und wobei der Korrekturwert zur Veränderung des Schwellenwertes oder zur Veränderung des Teilungsverhältnisses eines im Weg des Taktsignals angeordneten Frequenzteilers verwendet wird.

2. Verfahren nach Anspruch 1,
**dadurch gekennzeichnet, daß**
bei eingeschaltetem Gerät jeweils nach Ablauf eines vorgegebenen Zeitintervalles ein neuer Korrekturwert ermittelt wird.

3. Verfahren nach Anspruch 1 oder 2,
**dadurch gekennzeichnet, daß**
der ermittelte Korrekturwert in einem nichtflüchtigen Speicher abgespeichert wird.

4. Verfahren nach Anspruch 3,
**dadurch gekennzeichnet, daß**
der abgespeicherte Korrekturwert im Bereitschaftsbetrieb des Gerätes zur Steuerung des Zählvorganges verwendet wird.

5. Verfahren nach einem oder mehreren der vorhergehenden Ansprüche,
**dadurch gekennzeichnet, daß**
der Schwellenwert für eine vom Korrekturwert abhängige Anzahl von Zeiteinheiten verändert wird.

6. Anordnung zum Betreiben einer Software-Uhr in einem Gerät der Unterhaltungselektronik, mit
- einem Taktgeber,
- einer Zählschaltung zur Zählung von Taktsignalen,
- einer mit der Zählschaltung verbundenen ersten Vergleichsschaltung zur Umsetzung der Taktsignale in ein Zeitsignal unter Verwendung eines Schwellenwertes,
- einem Register zur Abspeicherung der aus der Zählung der Taktsignale abgeleiteten Zeitinformation,
- einer Echtzeitabtrennschaltung zur Abtrennung einer Echtzeitinformation aus einem übertragenen Rundfunksignal, und
- einer mit der Echtzeitabtrennschaltung und dem Register verbundenen zweiten Vergleichsschaltung zum Vergleichen der Echtzeitinformation mit der aus dem Register abgeleiteten Zeitinformation,
**dadurch gekennzeichnet, daß**
- die zweite Vergleichsschaltung (6) an ihrem Ausgang einen Korrekturwert zur Verfügung stellt, und
- die zweite Vergleichsschaltung (6) ausgangsseitig mit der ersten Vergleichsschaltung (3) verbunden ist, um der ersten Vergleichsschaltung (3) den Korrekturwert zur Veränderung des Schwellenwertes zuzuführen.

7. Anordnung zum Betreiben einer Software-Uhr in einem Gerät der Unterhaltungselektronik, mit
- einem Taktgeber,
- einer Zählschaltung zur Zählung von Taktsignalen,
- einer mit der Zählschaltung verbundenen ersten Vergleichsschaltung zur Umsetzung der Taktsignale in ein Zeitsignal unter Verwendung eines Schwellenwertes,
- einem Register zur Abspeicherung der aus der Zählung der Taktisgnale abgeleiteten Zeitinformation,
- -einer Echtzeitabtrennschaltung zur Abtrennung einer Echtzeitinformation aus einem übertragenen Rundfunksignal, und
- einer mit der Echtzeitabtrennschaltung und dem Register verhundenen zweiten Vergleichsschaltung zum Vergleichen der Echtzeitinformation mit der aus dem Register abgeleiteten Zeitinformation,
**dadurch gekennzeichnet, daß**
- die zweite Vergleichsschaltung (6) an ihrem Ausgang einen Korrekturwert zur Verfügung stellt, und
- die zweite Vergleichsschaltung (6) ausgangsseitig mit einem zwischen dem Taktgeber (1) und der Zählschaltung (3) angeordneten Frequenzteiler (2) verbunden ist, um dem Frequenzteiler (3) den Korrekturwert zur Veränderung des Teilungsverhältnisses zuzuführen.

8. Anordnung nach Anspruch 6 oder 7,
**dadurch gekennzeichnet, daß**
zwischen der zweiten Vergleichsschaltung (6) und der ersten Vergleichsschaltung (3) oder zwischen der zweiten Vergleichsschaltung (6) und dem Frequenzteiler (2) ein nichtflüchtiger Speicher (7) zur Abspeicherung des Korrekturwertes angeordnet ist.

## Claims

1. Method of operating a software clock in an electronic entertainment apparatus, in which high-frequency clock signals are counted and converted into time information and in which, using a comparison of the time information determined by counting the clock signals and the real-time information derived from the radio broadcasting signal, the time information determined by counting the clock signals is readjusted, **characterized in that**, within the scope of the comparison of the time information determined by counting the clock signals and the real-time information derived from the radio broadcasting signal, a correction value is furthermore determined and the correction value influences the counting operation in such a way that the deviations of the time information determined by counting the clock signals from the real-time information are reduced, wherein, to determine the time information, the clock signals are counted up to a set threshold value and, when the threshold value is reached, the time information is incremented by one time unit, and wherein the correction value is used to alter the threshold value or to alter the division ratio of a frequency divider disposed in the path of the clock signal.

2. Method according to Claim 1, **characterized in that**, with the apparatus switched on, a new correction value is always determined after expiry of a set time interval.

3. Method according to Claim 1 or 2, **characterized in that** the correction value determined is stored in a nonvolatile memory.

4. Method according to Claim 3, **characterized in that** the stored correction value is used to control the counting operation in the standby mode of the apparatus.

5. Method according to one or more of the preceding claims, **characterized in that** the threshold value is altered for a number of time units that is dependent on the correction value.

6. Means for operating a software clock in an electronic entertainment apparatus, comprising
- a clock generator,
- a counting circuit for counting clock signals,
- a first comparator circuit, connected to the counting circuit, for converting the clock signals into a time signal using a threshold value,
- a register for storing the time information derived from counting the clock signals,
- a real-time separation circuit for separating an item of real-time information from a transmitted radio broadcasting signal, and
- a second comparator circuit, connected to the real-time separation circuit and the register, for comparing the item of real-time information with the time information derived from the register,
**characterized in that**
- the second comparator circuit (6) provides a correction value at its output, and
- the output of the second comparator circuit (6) is connected with the first comparator circuit (3) in order to feed the correction value to the first comparator circuit (3) to alter the threshold value.

7. Means for operating a software clock in an electronic entertainment apparatus, comprising
- a clock generator,
- a counting circuit for counting clock signals,
- a first comparator circuit, connected to the counting circuit, for converting the clock signals into a time signal using a threshold value,
- a register for storing the time information derived from counting the clock signals,
- a real-time separation circuit for separating an item of real-time information from a transmitted radio broadcasting signal, and
- a second comparator circuit, connected to the real-time separation circuit and the register, for comparing the item of real-time information with the time information derived from the register,
**characterized in that**
- the second comparator circuit (6) provides a correction value at its output, and
- the output of the second comparator circuit (6) is connected to a frequency divider (2) disposed between the clock generator (1) and the counting circuit (3) in order to feed the correction value to the frequency divider (2) to alter the division ratio.

8. Means according to Claim 6 or 7, **characterized in that** a nonvolatile memory (7) for storing the correction value is disposed between the second comparator circuit (6) and the first comparator circuit (3) or between the second comparator circuit (6) and the frequency divider (2).

## Revendications

1. Procédé pour faire fonctionner une horloge logicielle dans un appareil de l'électronique du spectacle, selon lequel des signaux de cadence à haute fréquence sont comptés et convertis en une information de temps et selon lequel un asservissement de l'information de temps déterminée à partir du comptage des signaux de cadence est réalisé en utilisant une comparaison de l'information de temps déterminée par le comptage des signaux de cadence et de l'information de temps réel dérivée du signal radio, **caractérisé en ce qu'**en outre une valeur de correction est déterminée dans le cadre de la comparaison de l'information de temps déterminée à partir du comptage des signaux de cadence, et de l'information de temps réel dérivée du signal radio, et la valeur de correction influe sur le processus de comptage de telle sorte que les écarts entre l'information de temps déterminée par le comptage des signaux de cadence et l'information de temps réel sont réduits, les signaux de cadence étant comptés jusqu'à une valeur de seuil prédéterminée, pour la détermination de l'information de temps et lorsque la valeur de seuil est atteinte, une incrémentation de l'information de temps sur une unité de temps est exécutée, la valeur de correction étant utilisée pour modifier la valeur de seuil ou pour modifier le rapport de division d'un diviseur de fréquence disposé sur le trajet du signal de cadence.

2. Procédé selon la revendication 1, **caractérisé en ce que**, lorsque l'appareil est branché, une nouvelle valeur de correction est déterminée respectivement après l'écoulement d'un intervalle de temps prédéterminé.

3. Procédé selon la revendication 1 ou 2, **caractérisé en ce que** la valeur de correction déterminée est mémorisée dans une mémoire non volatile.

4. Procédé selon la revendication 3, **caractérisé en ce que** la valeur de correction mémorisée est utilisée dans le fonctionnement de préparation de l'appareil pour la commande du processus de comptage.

5. Procédé selon une ou plusieurs des revendications précédentes, **caractérisé en ce que** la valeur de seuil est modifiée pour un nombre d'unités de temps, qui dépend de la valeur de correction.

6. Dispositif pour faire fonctionner une horloge logicielle dans un appareil de l'électronique du spectacle, comportant
- un générateur de cadence,
- un circuit de comptage servant à compter des signaux de cadence,
- un premier circuit comparateur, qui est relié au circuit de comptage et sert à convertir les signaux de cadence en un signal de temps moyennant l'utilisation d'une valeur de seuil,
- un registre pour mémoriser l'information de temps dérivée du comptage des signaux de cadence,
- un circuit de séparation du temps réel pour séparer une information de temps réel d'un signal radio transmis, et
- un second circuit comparateur qui est relié au circuit de séparation du temps réel et est relié au registre et sert à comparer l'information de temps réel à l'information de temps tirée du registre,
**caractérisé en ce que**
- le second circuit comparateur (6) délivre à sa sortie une valeur de correction, et
- le second circuit comparateur (6) est relié côté sortie au premier circuit comparateur (3), pour envoyer au premier circuit comparateur (3) la valeur de correction pour modifier la valeur de seuil.

7. Dispositif pour la mise en oeuvre d'une minuterie logicielle dans un appareil de l'électronique du spectacle, comprenant
- un générateur de cadence,
- un circuit de comptage servant à compter des signaux de cadence,
- un premier circuit comparateur, qui est relié au circuit de comptage et sert à convertir les signaux de cadence en un signal de temps moyennant l'utilisation d'une valeur de seuil,
- un registre pour mémoriser l'information de temps dérivée du comptage des signaux de cadence,
- un circuit de séparation du temps réel pour séparer une information de temps réel d'un signal radio transmis, et
- un second circuit comparateur qui est relié au circuit de séparation du temps réel et au registre et sert à comparer l'information de temps réel à l'information de temps tirée du registre,
**caractérisé en ce que**
- le second circuit comparateur (6) délivre à sa sortie une valeur de correction, et
- le second circuit comparateur (6) est relié côté sortie à un diviseur de fréquence (2) disposé entre le générateur de cadence (1) et le circuit de comptage (3), de manière à envoyer au diviseur de fréquence (2) la valeur de correction pour modifier le rapport de division.

8. Dispositif selon la revendication 6 ou 7, **caractérisé en ce qu'**une mémoire non volatile (7) servant à mémoriser la valeur de correction est disposée entre le second circuit comparateur (6) et le premier circuit comparateur (3) ou entre le second circuit comparateur (6) et le diviseur de fréquence (2).
